# EUROPEAN PATENT SPECIFICATION

(11) **EP 2 590 317 B1**
(45) Date of publication and mention of the grant of the patent: **21.08.2013**
(21) Application number: 11187379.0
(22) Date of filing: 01.11.2011
(51) Int. Cl.: H02P 23/00, G05B 19/042, G05B 19/409

(54) **A motor drive and a method of configuring a motor drive**
Motorantrieb und Verfahren zur Konfiguration eines Motorantriebs
Entraînement de moteur et procédé pour le configurer

(43) Date of publication of application: 08.05.2013
(73) Proprietor: ABB Oy, 00380 Helsinki (FI)
(72) Inventor: Uusi-Äijö, Jarmo-Matti, 00380 Helsinki (FI)
(74) Representative: Holmström, Stefan Mikael

(56) References cited:
- EP-A1- 1 926 206
- EP-A2- 2 169 488
- US-B1- 6 810 292

## Description

### BACKGROUND OF THE INVENTION

### FIELD OF THE INVENTION

This invention relates to a motor drive and in particular to a solution for configuring a motor drive.

### DESCRIPTION OF PRIOR ART

A motor drive controls the supply of electric power to an electric motor on the basis of parameters stored in a memory of the drive. The number of parameters defining how the electric power supply should be carried out may be very large, and therefore the configuration of the drive, in other words the storage of the correct parameters into the memory, may be cumbersome.
Previously there is known a solution where an external computer is used for configuring a motor drive. In this prior art solution, the computer is connected to the drive via an interface. A program installed on the computer is then executed in order to access parameters stored in a memory of the motor drive and to change these stored parameters.

A drawback with the above-described solution is that the number of different types of motor drives is large. The configuration capabilities are generally different for different types of motor drives and therefore the configuration of a particular type of motor drive requires a configuration program tailor-made for the type of motor drive in question.

A known solution for configuring different types of drives is to download and install on the computer used a configuration program that is tailor made for the drive type in question. After this installation process, the computer can be connected to the motor drive in order to initiate the configuration. This is, however, a slow and cumbersome solution.

### SUMMARY OF THE INVENTION

An object of the present invention is to solve the above-mentioned drawback and to provide a solution which makes configuration of a motor drive easier than previously. This object is achieved with the solution of independent claims 1 and 8.

The possibility of accessing a configuration program stored in a memory of the motor drive such that the computer used for configuration can execute this program significantly simplifies the configuration. In such a case, it is sufficient to ensure that the motor drive has the correct version of the configuration program stored in its memory so that practically any computer can be directly used for configuration of the motor drive.

Preferred embodiments of the invention are disclosed in the dependent claims.

### BRIEF DESCRIPTION OF DRAWINGS

In the following, the present invention will be described in closer detail by way of example and with reference to the attached drawings, in which

Figure 1 is a block diagram of a motor drive,

Figure 2 is a flow chart of a method for configuring a motor drive, and

Figure 3 illustrates memory content in an embodiment of a motor drive.

### DESCRIPTION OF AT LEAST ONE EMBODIMENT

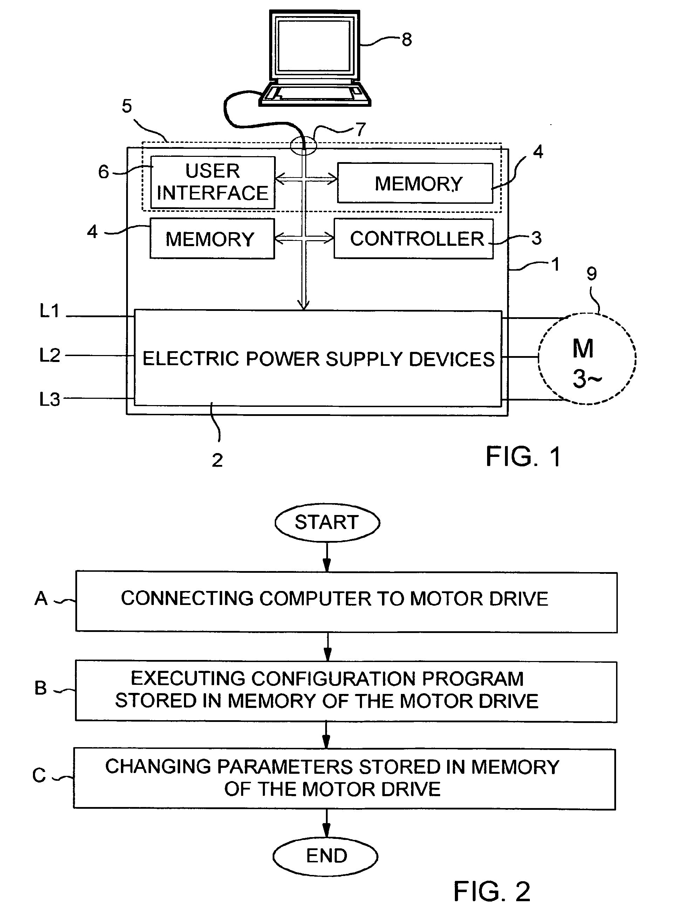

Figure 1 illustrates a first embodiment of a motor drive 1, such as a frequency converter, and Figure 2 illustrates the method steps of configuring the motor drive of Figure 1. The motor drive 1 of Figure 1 comprises electric power supply devices 2 which, controlled by a controller 3, supply electric power to an electric motor 9. According to prior art, the electric power supply devices 2 may include e.g. a rectifier, an intermediate circuit for filtering by a low-pass filter a pulsating direct voltage received from the rectifier or for converting such a voltage into direct current by a smoothing choke, and an inverter which converts the direct current of the intermediate circuit into an alternating current of a desired frequency.

In the example of Figure 1, the controller 3 utilizes parameters stored in a memory 4 for controlling the power supply provided by the power supply devices 2 to the electric motor 9. The memory 4 may be implemented as one or more memory circuits, for instance. In Figure 1 two memory circuits are illustrated by way of example.

Figure 1 shows that the motor drive 1 also includes an operation panel 5 provided with a user interface 6 and a memory 4. The user interface 6 may include a display and a keyboard. However, no such operation panel is necessary in all embodiments. If such an operation panel 5 is present in the motor drive 1, it may be used for browsing and changing parameters stored in the memory 4 of the motor drive in order to affect how the power supply to the electric motor 9 is implemented.

In Figure 1, the motor drive 1 comprises an interface 7 which may be utilized in method step A of Figure 2 to connect a computer 8 (such as a laptop) to the motor drive 1. The interface may be a USB (Universal Serial Bus) interface of type 2.0 or 3.0, for instance, and it may be arranged in the operation panel 5, if such an operation panel exists. This interface 7 provides the computer 8 with access to the memory 4 of the operation panel 5, for instance. In this memory circuit (or alternatively in another memory circuit of the motor drive to which the computer 8 is provided access via interface 7), a configuration program has been stored. The storing may take place in connection with manufacturing of the motor drive, for instance, which makes it possible to ensure that the configuration program is exactly the correct version for this motor drive. Consequently, the computer 8 can, in method step B of Figure 2, access the configuration program via the interface 8 and execute this program. While the program is running on the computer 8, the user of the computer can, in method step C, utilize the display and keyboard of the computer in order to browse and change the parameters stored in the memory 4 of the motor drive, and therefore to change how the motor drive operates while providing electric power to the electric motor 9.

An advantage obtained with the above-described solution of executing the configuration program with the external computer 8 is that the need of downloading and installing a configuration program from an external source to the computer 8 before this computer can be used to configure the motor drive can be avoided. Consequently, practically any computer can, without a need for prior software installations, be utilized for configuring the motor drive via the interface 7. One alternative is to utilize a configuration program compatible with the .NET environment provided by Microsoft or with the JAVA environment provided by Oracle, and which, in practise, is available on a great number of computers.

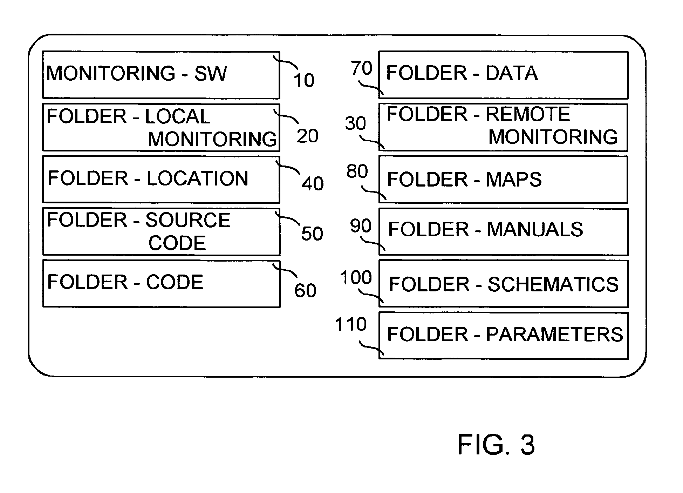

Storage of the configuration program in the operation panel makes it possible to improve the user friendliness. In that case the configuration program stored in the operation panel may also be accessed by a computer connected to the operation panel, while the operation panel is not attached or connected to the motor drive. The interface 6 (such as an USB interface) may in such a solution be used for electrifying the operation panel at least partially with electric power from the computer such that no additional power source is needed for the panel. In that case, if the panel contains the parameters of the motor drive (such as described in connection with folder 110 of Figure 3), parameters may be changed and stored into the portable panel at an office desk, for instance, instead of at the installation site of the motor drive only. After such configuration at a remote location, the panel may be transported to the installation site of the motor drive and attached to the motor drive. Also in this case configuration can be carried out without a need for downloading and installing a configuration program to the computer in advance, as the configuration program needed can be obtained from the memory of the panel which is being configured. After the operation panel has been connected to the motor drive, the parameters can be transferred into the motor drive and in this way been taken into use.

In addition, it is also possible to store a monitoring program in a memory 4 of the motor drive such that this monitoring program can be executed by the computer 8 while it is connected to the motor drive via the interface 7. Such a monitoring program may be a part of the configuration program or alternatively a separate independent program. Once the monitoring program is executed and the motor drive is active (supplies power to the electric motor), the monitoring program can be used to obtain monitoring data from the motor drive to the computer that describes the operational status of the motor drive, the electric motor, and the environment, for instance. Such monitoring data may be analysed with the computer 8 or alternatively transferred to another computer with software specifically designed for more thorough analysis of the monitoring data.

The motor drive 1 and (if available) in particular the operation panel 5 of the motor drive may be configured to independently carry out monitoring of the motor drive during operation of the motor drive 1 by storing monitoring data in the memory 4. Such monitoring may be initiated via the operation panel or via a computer connected to the motor drive, though the computer must not necessarily be connected to the motor drive 1 during the entire monitoring. Instead, the computer can be disconnected, the motor drive 1 continues with the monitoring, and once the computer 8 is reconnected to the motor drive, the monitoring data can be transferred to the computer via the interface 7.

In order to facilitate efficient maintenance of the motor drive, two different versions of the configuration program may exist. The version stored in the memory of the motor drive may be a Light version, which facilitates basic configuration and possibly also monitoring tasks, as described previously. In addition to this Light version, which can be executed directly with any computer connected to the motor drive without requiring prior downloading and installation on the program (from an external source), a Pro version may exist. In that case, the Pro version may work as a management tool, which, in addition to configuration and monitoring, makes it possible to update programs and other data stored in the memory of the drive. Such a Pro version may be distributed to specialized maintenance personnel only, for instance, and it requires advance downloading and installation on the computer which is subsequently connected to the motor drive. This Pro version may be used to update the version of the configuration program and monitoring program stored in the memory of the motor drive, for instance.

Figure 3 illustrates memory content in an embodiment of a motor drive. In the following it is by way of example assumed that Figure 3 illustrates the content of the memory circuit 4 of the operation panel 5 illustrated in Figure 1.

Folder 10 contains the monitoring program which can be executed by the computer while it is connected to the motor drive. In this example, the monitoring program is assumed to be a standalone monitoring software. The same, or alternatively, a second monitoring program stored in this folder can be used by the operation panel working as a monitoring master in order to carry out monitoring while no external computer is connected to the motor drive. Updating of the monitoring program or monitoring programs can be carried out with the previously mentioned PRO version of the configuration program.

Folder 20 is used for storing monitoring data when the monitoring is done while no external computer is connected to the motor drive. The monitoring can be started using a computer connection and then the computer can be detached and the operation panel preforms monitoring by itself. Monitoring can also be started with limited functionality using the user interface 6 of the operation panel 5. Later on, monitoring data can be collected from the memory circuit of the panel by connecting a computer to the operation panel.

Folder 30 is used by the operation panel for storing monitoring data when the monitoring is done with a computer connection. Monitoring data can be stored directly to the operation panel. Monitoring data can also be stored directly to a computer connected to the motor drive or operation panel. In that case it is not necessary to store monitoring data in folder 30, however, it is possible that monitoring data is stored both in the folder 30 and in the computer connected to the motor drive or operation panel.

Folder 40 is used for storing information about the location where the motor drive is installed. Such information may include: city, street, building, department, floor, room and cabined.

If more advanced programming is done in the motor drive, information about the source code and source code of the program can be stored in folder 50. All the programming may be carried out with the PRO version of the configuration program. It is not necessary that the computer used is connected to the panel during the programming. The source code can be copied to folder 50 using the Light version or the PRO version of the configuration program.

If a programming code needs to be compiled to a runtime-code, the compiled code may be stored in folder 60. This folder 60 can then be used as a backup restore source in case there is a major breakdown of the drive. Compiled files can be moved using the Light version or the PRO version of the configuration program.

Other data such as temporarily stored runtime operation panel related data and operation panel firmware software may be stored in folder 70. Panel firmware and other configuration files in this folder 70 are only for backup purpose and are not directly in use by the panel. Panel firmware and configuration files can be restored from folder 70 by using the PRO version of the configuration program.

Folder 80 may contain road maps covering the location of the motor drive, location maps, building and campus maps, and possible other material related to maps.

Folder 90 may contain manuals, such as an installation manual, a programming manual, a panel manual, a configuration program manual and other documents which can be categorized as manuals. Manuals can be transferred and updated in folder 90 by using the Light version or the PRO version of the configuration program.

Folder 100 may contain installation schematics of the motor drive. If the motor drive is a part of a bigger system, full system schematics are stored in here. The information contained in folder 100 can be moved between the motor drive and a computer connected to the motor drive by using the Light version of the PRO version of the configuration program.

Folder 110 may contain parameter settings. In order to achieve faster parameter configuration, parameters can be copied into this folder 110 and then the new set of parameters can be taken into use after a control board restart. More advanced runtime parameter reconfiguration may be carried out without a restart. Parameters can be stored into folder 110 and moved from folder 110 by using the operation panel and the Light version or PRO version of the configuration program. A timestamp may be maintained for a parameter copy.

It is to be understood that the above description and the accompanying figures are only intended to illustrate the present invention. It will be obvious to a person skilled in the art that the invention can be varied and modified without departing from the scope of the invention.

## Claims

1. A motor drive (1) comprising:
electric power supply devices (2) for supplying electric power to an electric motor (9),
a memory (4) for storing parameters,
a controller (3) for controlling the power supply according to the parameters stored in the memory (4), and
an interface (7) for connecting a computer (8) to the motor drive, **characterized in that**
a configuration program is stored in the memory (4), and
the interface (7) provides the computer (8) with access to the memory (4) for executing the configuration program with the computer (8) and for changing the parameters stored in the memory (4) with the computer (8) executing the configuration program.

2. The motor drive according to claim 1, **characterized in that** the memory (4) of the motor drive consists of more than one memory circuit arranged at different locations in the motor drive (1).

3. The motor drive according to claim 1 or 2, **characterized in that** the motor drive (1) comprises an operation panel (5) with a user interface, and that the configuration program is stored in a memory circuit of the operation panel (5).

4. The motor drive according to one of claims 1 to 3, **characterized in that** the interface (7) providing the computer with access to the memory (4) is a USB interface.

5. The motor drive according to one of claims 1 to 4, **characterized in that**
a monitoring program is stored in the memory (4), and
the interface (7) provides the computer (8) with access to the memory (4) for executing the monitoring program with the computer (8) and for receiving monitoring data describing the operating status of the motor drive (1) produced during operation of the motor drive (1).

6. The motor drive according to claim 5, **characterized in that** the monitoring program and the configuration program consist of one single executable program stored in the memory (4).

7. The motor drive according to one of claims 1 to 6, **characterized in that** the motor drive (1) is arranged
to carry out monitoring during operation of the motor drive by storing monitoring data describing the operating status of the motor drive (1) in the memory (4), and
to provide the computer (8) with the monitoring data stored in the memory (4) once the computer is subsequently reconnected to the motor drive (1) via the interface (7).

8. A method for configuring a motor drive (1) with power supply devices (2) for supplying electric power to an electric motor (4) according to parameters stored in a memory (4) of the motor drive (1), **characterized in that** the method comprises:
connecting (A) a computer (8) via an interface (7) to the motor drive (1),
executing (B) a configuration program stored in the memory (4) of the motor drive (1) with the computer (8), and
changing (C) the parameters stored in the memory (4) of the motor drive (1) with the configuration program executed by the computer (8).

## Patentansprüche

1. Motorantrieb (1), umfassend:
elektrische Leistungsversorgungsvorrichtungen (2) zum Versorgen eines Elektromotors (9) mit elektrischer Leistung,
einen Speicher (4) zum Speichern von Parametern,
eine Steuerung (3) zum Steuern der Leistungsversorgung entsprechend den in dem Speicher (4) gespeicherten Parametern, und
eine Schnittstelle (7) zum Verbinden eines Computers (8) mit dem Motorantrieb,
**dadurch gekennzeichnet, dass**
ein Konfigurationsprogramm in dem Speicher (4) gespeichert ist, und
die Schnittstelle (7) für den Computer (8) einen Zugang zu dem Speicher (4) zum Ausführen des Konfigurationsprogramms mit dem Computer (8) und zum Ändern der in dem Speicher (4) gespeicherten Parameter mit dem das Konfigurationsprogramm ausführenden Computer (8) bereitstellt.

2. Motorantrieb nach Anspruch 1, **dadurch gekennzeichnet, dass** der Speicher (4) des Motorantriebs aus mehr als einer Speicherschaltung besteht, die an verschiedenen Stellen in dem Motorantrieb (1) angeordnet sind.

3. Motorantrieb nach Anspruch 1 oder 2, **dadurch gekennzeichnet, dass** der Motorantrieb (1) einen Betriebsbereich (5) mit einer Anwenderschnittstelle umfasst und das Konfigurationsprogramm in einer Speicherschaltung des Betriebsbereiches (5) gespeichert ist.

4. Motorantrieb nach einem der Ansprüche 1 bis 3, **dadurch gekennzeichnet, dass** die Schnittstelle (7), die für den Computer einen Zugang zu dem Speicher (4) bereitstellt, eine USB-Schnittstelle ist.

5. Motorantrieb nach einem der Ansprüche 1 bis 4, **dadurch gekennzeichnet, dass** ein Überwachungsprogramm in dem Speicher (4) gespeichert ist, und
die Schnittstelle (7) für den Computer (8) einen Zugang zu dem Speicher (4) zum Ausführen des Überwachungsprogramms mit dem Computer (8) und zum Empfangen von den Betriebsstatus des Motorantriebes (1) beschreibenden Überwachungsdaten, die während des Betriebes des Motorantriebes (1) erzeugt werden, bereitstellt.

6. Motorantrieb nach Anspruch 5, **dadurch gekennzeichnet, dass** das Überwachungsprogramm und das Konfigurationsprogramm aus einem einzelnen in dem Speicher (4) gespeicherten ausführbaren Programm bestehen.

7. Motorantrieb nach einem der Ansprüche 1 bis 6, **dadurch gekennzeichnet, dass** der Motorantrieb (1) angeordnet ist
zum Ausführen einer Überwachung während des Betriebes des Motorantriebes durch Speichern von den Betriebsstatus des Motorantriebes (1) beschreibenden Überwachungsdaten in dem Speicher (4) und
zum für den Computer (8) erfolgenden Bereitstellen der in dem Speicher (4) gespeicherten Überwachungsdaten, sobald der Computer anschließend wieder mit dem Motorantrieb (1) über die Schnittstelle (7) verbunden wird.

8. Verfahren zum Konfigurieren eines Motorantriebes (1) mit Leistungsversorgungsvorrichtungen (2) zum Versorgen eines Elektromotors (4) mit elektrischer Leistung entsprechend in einem Speicher (4) des Motorantriebes (1) gespeicherten Parametern, **dadurch gekennzeichnet, dass** das Verfahren umfasst:
Verbinden (A) eines Computers (8) über eine Schnittstelle (7) mit dem Motorantrieb (1),
Ausführen (B) eines in dem Speicher (4) des Motorantriebes (1) gespeicherten Konfigurationsprogramms mit dem Computer (8) und
Ändern (C) der in dem Speicher (4) des Motorantriebes (1) gespeicherten Parameter mit dem von dem Computer (8) ausgeführten Konfigurationsprogramm.

## Revendications

1. Commande de moteur (1) comprenant :
des dispositifs d'alimentation électrique (2) pour fournir une alimentation électrique à un moteur électrique (9) ;
une mémoire (4) pour stocker des paramètres ;
un contrôleur (3) pour contrôler l'alimentation électrique selon les paramètres stockés dans la mémoire (4) ; et
une interface (7) pour connecter un ordinateur (8) à la commande de moteur ;
**caractérisée en ce que** :
un programme de configuration est stocké dans la mémoire (4) ; et
l'interface (7) permet à l'ordinateur (8) d'accéder à la mémoire (4) pour exécuter le programme de configuration avec l'ordinateur (8) et modifier les paramètres stockés dans la mémoire (4), l'ordinateur (8) exécutant le programme de configuration.

2. Commande de moteur selon la revendication 1,
**caractérisée en ce que** la mémoire (4) de la commande de moteur se compose de plus d'un circuit de mémoire agencé à des endroits différents dans la commande de moteur (1).

3. Commande de moteur selon la revendication 1 ou 2,
**caractérisée en ce que** la commande de moteur (1) comprend un panneau de commande (5) avec une interface utilisateur, et **en ce que** le programme de configuration est stocké dans un circuit de mémoire du panneau de commande (5).

4. Commande de moteur selon l'une des revendications 1 à 3,
**caractérisée en ce que** l'interface (7) permettant à l'ordinateur d'accéder à la mémoire (4) est une interface USB.

5. Commande de moteur selon l'une des revendications 1 à 4,
**caractérisée en ce que** :
un programme de surveillance est stocké dans la mémoire (4) ; et
l'interface (7) permet à l'ordinateur (8) d'accéder à la mémoire (4) pour exécuter le programme de surveillance avec l'ordinateur (8) et recevoir des données de surveillance décrivant l'état de fonctionnement de la commande de moteur (1), générées lors du fonctionnement de la commande de moteur (1).

6. Commande de moteur selon la revendication 5,
**caractérisée en ce que** le programme de surveillance et le programme de configuration sont constitués par un seul programme exécutable stocké dans la mémoire (4).

7. Commande de moteur selon l'une des revendications 1 à 6,
**caractérisée en ce que** la commande de moteur (1) est agencée de façon à :
exécuter une surveillance lors du fonctionnement de la commande de moteur en stockant dans la mémoire (4) des données de surveillance décrivant l'état de fonctionnement de la commande de moteur (1) ; et
fournir à l'ordinateur (8) les données de surveillance stockées dans la mémoire (4) une fois que l'ordinateur a été reconnecté par la suite à la commande de moteur (1) via l'interface (7).

8. Procédé de configuration d'une commande de moteur (1) avec des dispositifs d'alimentation électrique (2) destinés à fournir une alimentation électrique à un moteur électrique (4) selon des paramètres stockés dans une mémoire (4) de la commande de moteur (1), **caractérisé en ce que** la méthode comprend :
la connexion (A) d'un ordinateur (8) via une interface (7) à la commande de moteur (1) ;
l'exécution (B) d'un programme de configuration stocké dans la mémoire (4) de la commande de moteur (1) avec l'ordinateur (8) ; et
la modification (C) des paramètres stockés dans la mémoire (4) de la commande de moteur (1) avec le programme de configuration exécuté par l'ordinateur (8).
